# EUROPEAN PATENT SPECIFICATION

(11) **EP 2 868 914 B1**
(45) Date of publication and mention of the grant of the patent: **25.05.2016**
(21) Application number: 14188170.6
(22) Date of filing: 08.10.2014
(51) Int. Cl.: F03D 1/00, F03D 1/06

(54) **Device and method of attaching and detaching blade for wind turbine**
Vorrichtung und Verfahren zum Anbringen und Entfernen einer Schaufel einer Windturbine
Dispositif et procédé permettant d'attacher et de détacher une pale pour éolienne

(30) Priority: 09.10.2013 JP 2013211984
(43) Date of publication of application: 06.05.2015
(73) Proprietor: MITSUBISHI HEAVY INDUSTRIES, LTD., Tokyo 108-8215 (JP)
(72) Inventor: Numajiri, Tomohiro, Tokyo, 108-8215 (JP); Seki, Seita, Tokyo, 108-8215 (JP); Kayama, Hiroyuki, Tokyo, 108-8215 (JP)
(74) Representative: Intès, Didier Gérard André

(56) References cited:
- WO-A2-2010/034288
- WO-A2-2011/095167
- DE-A1-102008 053 404
- GB-A- 2 483 677
- US-A1- 2010 135 797

## Description

### TECHNICAL FIELD

The present disclosure relates to a blade attaching and detaching method and a blade attaching and detaching apparatus for a wind turbine. For instance, it relates to a blade attaching and detaching method and a blade attaching and detaching apparatus for a wind turbine for attaching and detaching a blade with respect to a blade attachment portion of a hub during construction, maintenance, dismantlement or the like of a wind turbine.

### BACKGROUND

In recent years, a wind turbine using wind force has become common in consideration of preservation of the global environment. A wind turbine as a power generating facility includes a rotor having a hub and a plurality of blades attached to the hub, a nacelle supporting the rotor to be freely rotatable, and a tower where the nacelle is mounted on the upper end of the tower. The rotor rotates by receiving wind force at the blades, and the rotation energy is inputted into a generator via a main shaft coupled to the rotor, thereby generating electric power.

In a case of such a wind turbine, the blades may be attached or detached during construction, maintenance, dismantlement or the like. A known technique for attaching and detaching blades employs a lifting mechanism such as a crane or a winch to attach or detach the blades one by one with respect to a hub positioned at high altitude at the upper part of a tower.

For instance, Patent Documents 1, 2 and 3 disclose techniques for attaching a blade to a blade attachment portion positioned below a hub in the vertical direction in a state where a blade is in a substantially vertical attitude and suspended on the hub.

Meanwhile, a common wind turbine has a tilt angle at a rotational axis line of a rotor and a cone angle at a blade in order to avoid interference between the blades and the tower. Herein, a tilt angle is an angle between the horizontal direction and the rotational axis of the rotor, the rotational axis being inclined upward with respect to the horizontal direction, while a cone angle is an angle between the rotational plane of the rotor and the blade, the blade being inclined forward with respect to the rotational plane of the rotor. When attaching a blade to the hub, it may be necessary to arrange the blade root portion of the blade and the blade attachment portion of the hub to face each other accurately. Therefore, it may be necessary to adjust the attitude of the blade taking account of the tilt angle and the cone angle when attaching or detaching the blade with respect to the hub.

Thus, Patent Document 1 for instance discloses a configuration in which an attitude adjusting mechanism disposed in a hub is used to adjust the position of the first yoke mounted to the blade root portion of a blade with respect to the second yoke mounted to the blade attachment portion of the hub. With this configuration, the attitude of the blade is adjusted with respect to the blade attachment portion of the hub. Further, Patent Document 2 discloses a technique of attaching a blade being suspended on a wire to a hub via a suspending jig configured such that the wire is attached to the side of the blade root portion of the blade. This technique uses the suspending jig to suspend a blade so that the gravity center of the blade is positioned in the vertical line of the wire in a state where the blade is inclined by a certain angle with respect to the vertical direction. As a result, the attitude of the blade during attachment or detachment of the blade is maintained at an attitude corresponding to an angle of the hub. Finally, Patent Document 3 discloses yet another technique.

### Citation List

### Patent Literature

Patent Document 1: WO 2009/128708
Patent Document 2: EP 2159419A
Patent Document 3: GB 2483677

### SUMMARY

However, in a case where an attitude adjusting mechanism is disposed on the hub and used to adjust the attitude of the blade as described in Patent Document 1, it may be necessary to apply force large enough to change the attitude of the blade to the blade root portion being an end portion of a long blade, raising the possibility that the blade root portion receives excessive load. Especially, the length of the blades recently tends to increase with the increase in size of wind turbines, increasing the weight of the blades as well. Thus, the load applied to the blade root portions of the blades has also become large. Furthermore, a large and complicated device configuration may be required to achieve an attitude adjusting mechanism that changes the gravity center position of the blade with respect to the suspending point.

On the other hand, the technique described in Patent Document 2 can prevent excessive load from being applied on the blade root portions by positioning the gravity center position of the blade in the vertical direction line of the suspending point, the blade being inclined by the suspending jig. However, it is difficult to arrange the blade root portion of a blade and the blade attachment portion of a hub to face each other accurately by using a suspending jig alone. Further, a common wind turbine is often installed under circumstances with strong wind, which tends to make the attitude of the blades unstable. Thus, it is difficult to maintain the attitude of a blade appropriately and move the blade closer to the blade attachment portion of a hub.

An object of at least one embodiment of the present invention is to provide a blade attaching and detaching method and a blade attaching and detaching apparatus for a wind turbine which are capable of maintaining a blade at an appropriate attitude when attaching and detaching the blade, and also capable of attaching and detaching the blade stably with respect to a hub.

A blade attaching and detaching method for a wind turbine according to at least one embodiment of the present invention is for a wind turbine which includes at least one blade, a hub to which the blade is attachable, a nacelle supporting the hub to be freely rotatable, and a tower to which the nacelle is mounted at an upper end of the tower. The blade attaching and detaching method includes :a holding step of holding the blade, in a state where the blade is being suspended so that a blade root portion of the blade is facing upward, at a first attitude in which a blade length direction of the blade is inclined with respect to a vertical direction, by receiving support load in a horizontal direction applied from the blade by a plurality of supports at positions varied from one another in the blade length direction of the blade; an attaching/detaching step of attaching or detaching the blade with respect to a blade attachment portion positioned at a lower part of the hub in a substantially vertical direction, the blade being held at the first attitude; an attitude adjusting step of adjusting an attitude of the blade between the first attitude and a second attitude in which an angle between the blade length direction of the blade and the vertical direction is different from that in the first attitude, by changing a supporting position in the horizontal direction of at least one of the plurality of supports.

According to the above described blade attaching and detaching method for a wind turbine, when attaching or detaching the blade with respect to the blade attachment portion of the hub, the blade is in a state of being held at the first attitude in which the blade length direction of the blade is inclined with respect to the vertical direction. By setting this first attitude to be an attitude in which the blade root portion of the blade accurately faces the blade attachment portion of the hub, it is possible to attach or detach the blade with respect to the hub at an appropriate attitude. The first attitude here is an attitude in which the blade length direction of the blade is inclined with respect to the vertical direction, so that the suspending point of the blade and the gravity center position of the blade are not positioned in the same vertical line. Thus, the blade receives moment caused by its own weight. The above blade attaching and detaching method for a wind turbine includes receiving the horizontal direction component (support load in the horizontal direction) of this moment by a plurality of supports at positions different from one another in the blade length direction of the blade. As a result, it is possible to hold the blade stably at the first attitude and to prevent excessive load from being applied to part of the blade. Further, at least one of the supporting positions in the horizontal direction of the plurality of supports is changed so that the attitude of the blade is adjusted between the first attitude and the second attitude. The second attitude here is an attitude in which an angle between the blade length direction of the blade and the vertical direction is different from that in the first attitude. For instance, it is an attitude in which the blade length direction of the blade is along the vertical direction. As a result, it is possible to suspend and lift or lower the blade at an appropriate attitude by holding the blade at the second attitude when the blade is positioned away from the hub.

The plurality of supports include a first support disposed on the blade attachment portion so as to contact at least a part of the blade root portion of the blade. Also, in the holding step, the first support receives the support load in the horizontal direction applied from the blade root portion of the blade.

When attaching or detaching the blade with respect to the hub, it may be necessary to arrange the blade root portion of the blade to face the blade attachment portion of the hub accurately at least when the blade is in the vicinity of the blade attachment portion. Thus, providing the first support for holding the blade at the first attitude disposed at the blade attachment portion makes it possible to hold the blade at the first attitude with high accuracy when the blade is positioned in the vicinity of the blade attachment portion. Further, when attaching the blade, it is possible to guide the blade root portion of the blade to the blade attachment portion of the hub accurately by the first support. Moreover, in a common case, the blade root portion of the blade, which is to be attached to the hub, is often formed to have higher strength than other part of the blade. Thus, it is possible to increase the durability against the support load applied from the first support to the blade root portion of the blade.

In one embodiment, the first support is disposed so as to contact at least a first region on a tower side, the first region being part of an outer circumferential surface of the blade root portion of the blade. Also, the plurality of supports include a second support which contacts the blade at a blade tip portion side with respect to a gravity center position of the blade. In the attitude adjusting step, the attitude of the blade is adjusted by changing the supporting position in the horizontal direction of the second support.

In the above embodiment, the second support is configured to contact the blade at the blade tip portion side with respect to the gravity center position, thereby causing moment which acts on the blade and moves the blade root portion toward the tower side. Thus, providing the first support configured to contact the first region on the tower side makes it possible to receive the support load in the horizontal direction of the blade at two points including a point at the first support and a point at the second support and thus to hold the blade at the first attitude stably. Further, changing the supporting positions in the horizontal direction of the second support makes it possible to easily rotate the blade about the suspending point of the blade or the first support, and thus to adjust the blade at a desired attitude.

In another embodiment, the first support is disposed so as to contact at least a second region on a side opposite to the tower, the second region being part of the outer circumferential surface of the blade root portion of the blade. Also, the plurality of supports include a second support which contacts the blade at a blade root portion side with respect to a gravity center position of the blade. In the attitude adjusting step, the attitude of the blade is adjusted by changing the supporting position in the horizontal direction of the second support.

In the above embodiment, the second support is configured to contact the blade at the blade root portion side with respect to the gravity center position, thereby causing moment which acts on the blade and moves the blade root portion toward a side opposite to the tower. Thus, providing the first support configured to contact the second region on a side opposite to the tower makes it possible to receive the support load in the horizontal direction of the blade at two points including a point at the first support and a point at the second support and thus to hold the blade at the first attitude stably. Further, changing the supporting positions in the horizontal direction of the second support makes it possible to easily rotate the blade about the suspending point of the blade or the first support, and thus to adjust the blade at a desired attitude.

The blade attaching and detaching method further includes a lifting/lowering step of lifting or lowering the blade along the tower using a lifting mechanism including a winch or a crane.

As a result, it is possible to suspend and lift or lower the blade smoothly.

In one embodiment, the lifting/lowering step includes: a vertical lifting/lowering step of lifting or lowering the blade in a state where the blade is maintained at the second attitude in which the blade length direction is along the substantially vertical direction; a horizontal lifting/lowering step of lifting or lowering the blade in a state were the blade is maintained at a third attitude in which the blade length direction is along the horizontal direction; and a rotating step of rotating the blade between the vertical lifting/lowering step and the horizontal lifting/lowering step. Also, in the lifting/lowering step, the blade is lifted or lowered by carrying out the vertical lifting/lowering step when the blade is at an upper part of the tower, and the blade is lifted or lowered by carrying out the horizontal lifting/lowering step when the blade is at a lower part of the tower.

When attaching the blade, the blade disposed horizontally on a platform on which the tower is installed standing upright may be suspended and lifted in the third attitude in which the blade length direction is along the horizontal direction, and then the blade may be rotated until it is in the second attitude in which the blade length direction is along the substantially vertical direction. Subsequently, the blade may be suspended and lifted in the second attitude to the vicinity of the hub, and then the attitude of the blade may be adjusted to the first attitude before attaching the blade to the hub. On the other hand, when detaching the blade, the attitude of the blade having been removed from the hub and being maintained in the first attitude may be adjusted to the second attitude, and then the blade may be suspended and lowered in the second attitude before being rotated to the third attitude. Then, the third attitude may be maintained while placing the blade horizontally on the platform. As a result, it is possible to change the attitude of the blade while preventing contact between an end of the blade and the platform, and thus to attach or detach the blade with respect to the hub.

In one embodiment, the plurality of supports include a first support disposed on the blade attachment portion so as to contact at least a part of the outer circumferential surface of the blade root portion of the blade, and a second support disposed on a blade tip portion side with respect to the first support and configured to receive the support load in the horizontal direction and to restrict swinging movement in the horizontal direction of the blade, the blade being in a state of being suspended by the lifting mechanism. Also, the blade attaching and detaching method further includes a moving step of moving the second support in accordance with movement of the blade along the tower in the lifting/lowering step. In the moving step, the second support is moved along the tower while being guided by a guide part.

In the above embodiment, the second support receives the support load in the horizontal direction applied from the blade and restricts swinging movement of the blade in the horizontal direction in order to lift or lower the blade stably. This second support is configured to move following the movement of the blade along the tower, which makes it possible to restrict swinging movement of the blade all the time while the blade is being lifted or lowered regardless of the position of the blade in the height direction. Further, the second support is configured to restrict swinging movement of the blade in a state of being suspended by the lifting mechanism. Thus, the gravity load of the blade is mainly received by the lifting mechanism and the second support does not have to actively receive the gravity load. Accordingly, it is possible to reduce the design strength of the second support and the guide parts for guiding the second support, thereby enabling reduction in size and weight.

In one embodiment, in the rotating step, the second support is rotated along with rotation of the blade.

Rotating the second support to follow rotation of the blade as described above prevents the weight of the blade from being applied to the second support beyond the tolerant range. Thus, it becomes possible to adjust the attitude of the blade in a state where the second support is installed, and thus to facilitate the lifting or lowering work of the blade.

In one embodiment, the second support includes a horizontal-direction adjusting mechanism configured to adjust a distance between the tower and the second support in the horizontal direction. Also, in the attitude adjusting step, the horizontal-direction adjusting mechanism of the second support is used to adjust the attitude of the blade between the first attitude and the second attitude.

As a result, it is possible to adjust the attitude of the blade between the first attitude and the second attitude easily and also appropriately.

In some embodiments, the second support is connected to a wire of a crane or a winch disposed on land, on a ship, or on a structure floating on ocean. Also, in the attitude adjusting step, the attitude of the blade is adjusted between the first attitude and the second attitude by adjusting length of the wire.

As a result, it is possible to adjust the attitude of the blade between the first attitude and the second attitude by a simplified configuration.

In one embodiment, in the rotating step, while being suspended at two points including a point at a blade root portion side and a point at a blade tip portion side via two wires, the blade is rotated by adjusting length of each of the two wires by means of the lifting mechanism disposed in the hub of the nacelle.

As a result, it is possible to rotate the blade by a simplified configuration.

A blade attaching and detaching apparatus for a wind turbine according to at least one embodiment of the present invention is for a wind turbine which includes at least one blade, a hub to which the blade is attachable via a bearing including a first rotation ring to which the blade root portion of the blade is attachable and a second rotation ring mounted on the hub to be rotatable relative to the first rotation ring, a nacelle supporting the hub to be freely rotatable, and a tower to which the nacelle is mounted at an upper end of the tower. The blade attaching and detaching apparatus includes: a lifting mechanism configured to lift or lower the blade in a state where the blade is being suspended so that a blade root portion of the blade faces upward; and a plurality of supports configured to, in a state where the blade is being suspended by the lifting mechanism, receive support load in the horizontal direction applied from the blade at positions varied from one another in a blade length direction of the blade. Also, one of the supports is configured to be capable of adjusting the attitude of the blade between a first attitude in which the blade is inclined with respect to the vertical direction and a second attitude by changing supporting positions in the horizontal direction of the blade. In the second attitude, an angle between a blade length direction of the blade and the vertical direction is different from that of the first attitude.

According to the above described blade attaching and detaching apparatus for a wind turbine, the blade is attached or detached in a state where the plurality of supports hold the blade at the first attitude in which the blade length direction of the blade is inclined from the vertical direction, which makes it possible to attach or detach the blade with respect to the hub at an appropriate attitude. Further, the plurality of supports are configured to receive the support load in the horizontal direction applied from the blade at positions different from one another in the blade length direction of the blade, which makes it possible to stably hold the blade at the first attitude and to prevent excessive load from being applied to part of the blade. Moreover, at least one of the supports is configured to be capable of adjusting the attitude of the blade between the first attitude and the second attitude different from the first attitude by changing the supporting positions in the horizontal direction of the blade. Thus, it is possible to suspend and lift or lower the blade at an appropriate attitude by holding the blade at the second attitude when the blade is positioned away from the hub.

The plurality of supports include a first support which is attached to the second rotation ring so as to contact at least a part of the blade root portion of the blade.

Providing the first support for holding the blade at the first attitude makes it possible to hold the blade at the first attitude with high accuracy when the blade is positioned in the vicinity of the blade attachment portion. Further, when attaching the blade, the blade root portion of the blade can be accurately guided to the first rotation ring by means of the first support mounted to the second rotation ring. Moreover, in a common case, the blade root portion of the blade which is to be attached to the hub is often formed to have higher strength than other part of the blade. Thus, it is possible to increase the durability against the support load applied from the first support to the blade root portion of the blade.

In some embodiments, the plurality of supports include a first support disposed on the blade attachment portion so as to contact at least a part of an outer circumferential surface of the blade root portion of the blade, and a second support disposed on a blade tip portion side with respect to the first support and configured to receive the support load in the horizontal direction and to restrict swinging movement in the horizontal direction of the blade, the blade being in a state of being suspended by the lifting mechanism. Also, the blade attaching and detaching apparatus further includes: a moving mechanism configured to move the second support in accordance with movement of the blade along the tower by the lifting mechanism; and a guide part configured to guide the second support so that the second support moves along the tower by the moving mechanism.

The above embodiments include the second support which moves following the movement of the blade along the tower and receives the support load in the horizontal direction applied from the blade, the second support being provided for restricting swinging movement of the blade in the horizontal direction. As a result, it is possible to hold the blade at an appropriate attitude and to restrict swinging movement of the blade all the time while the blade is being lifted or lowered regardless of the position of the blade in the height direction, and thus to lift or lower the blade stably. Further, the second support does not have to actively receive the gravity load. Accordingly, it is possible to reduce the design strength of the second support and the guide parts for guiding the second support, which enables reduction in size and weight.

According to at least one embodiment of the present invention, when attaching or detaching a blade with respect to a hub, the blade is attached or detached in a state where the blade is held at the first state in which the blade length direction of the blade is inclined with respect to the vertical direction, so that it is possible to attach or detach the blade with respect to the hub while the blade is at an appropriate attitude. Further, when holding the blade at the first attitude, the support load in the horizontal direction applied from the blade is received by a plurality of supports at positions different from one another in the blade length direction of the blade. As a result, it is possible to hold the blade stably at the first attitude, and to prevent excessive load from being applied to part of the blade. Also, it is possible to suspend and lift or lower the blade at an appropriate attitude by holding the blade at the second attitude different from the first attitude when the blade is positioned away from the hub.

### BRIEF DESCRIPTION OF DRAWINGS

FIG. 1 is a diagram of an exemplary configuration of a wind turbine power generating apparatus.
FIG. 2 is a perspective view in the vicinity of blade root portions of blades being attached or detached with respect to a hub according to one embodiment.
FIG. 3A is a diagram for describing a holding step of a blade attaching and detaching method according to one embodiment.
FIG. 3B is a diagram for describing a blade attaching and detaching step of the blade attaching and detaching method according to one embodiment.
FIG. 3C is a diagram for describing an attitude adjusting step of the blade attaching and detaching method according to one embodiment.
FIG. 4 is a diagram for describing a holding step of a blade attaching and detaching method according to another embodiment.
FIG. 5 is a perspective view of an exemplary configuration of the first support.
FIG. 6A is a cross-sectional view of a state where a blade is attached to a blade rotation ring, to which a first support is mounted.
FIG. 6B is a cross-sectional view of a state where a blade is detached from the blade rotation ring, to which the first support is mounted.
FIG. 7 is a side view of an exemplary configuration of a second support.
FIG. 8 is a perspective view of an exemplary configuration of the second support.
FIG. 9 is a diagram for describing an attitude adjusting step by the second support.
FIG. 10 is a diagram for describing a lifting/lowering step of the blade attaching and detaching method according to one embodiment.
FIG. 11 is a side view of an exemplary configuration of the second support having a rotary mechanism.
FIG. 12 is a diagram for describing a rotating procedure for the second support using the rotary mechanism according to one embodiment.
FIG. 13 is a side view of an exemplary configuration of the second support according to another embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

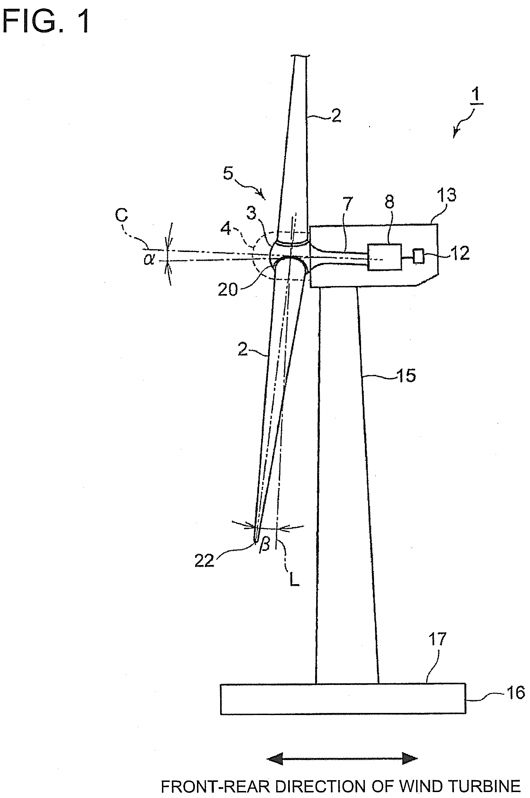

First, in reference to FIG. 1, a wind turbine power generating apparatus will be described as an example of a wind turbine to which a blade attaching and detaching apparatus according to the embodiments may be applied.

FIG. 1 is a diagram of an exemplary configuration of a wind turbine power generating apparatus. As illustrated in the drawing, the wind turbine power generating apparatus 1 is disposed standing upright on a base 16. A platform 17 is disposed on the upper part of the base 16. A variety of works including attaching and detaching the blades 2 are carried out on this platform 17. The wind turbine power generating apparatus 1 here according to the present embodiment may be an offshore wind turbine power generating apparatus disposed on the sea surface, or an onshore wind turbine power generating apparatus disposed on the ground.

The wind turbine power generating apparatus 1 mainly includes at least one blade 2, a hub 3 to which the blades 2 are attached, a main shaft 7 coupled to the hub 3, a drive train 8 for transmitting torque of the main shaft 7, and a generator 12 to which the torque of the main shaft 7 is inputted via the drive train 8. The wind turbine power generating apparatus 1 also includes a nacelle 13 for accommodating a variety of devices such as the main shaft 7, the drive train 8, and the generator 12, and a tower 15 which supports the nacelle 13. Here, the hub 3 may be covered by a spinner (hub cover) 4.

In some embodiments, a plurality of blades 2 are mounted to the hub 3 radially at equal intervals. The number of blades 2 is not particularly limited, and two or three blades 2 may be mounted to the hub 3, for instance. These blades 2 and hub 3 make up the rotor 5.

The main shaft 7 is supported to be freely rotatable on the nacelle 13, and thus the hub 3 coupled to the main shaft 7 is rotatable along with the main shaft 7. As a result, the rotor 5 rotates by wind force received at the blades 2. Further, the rotor 5 can be rotated also by a turning device (not illustrated) without using the wind force.

The above turning device for rotating the rotor 5 is, for instance, provided for the purpose of rotating the rotor 5 to a desired angular position (azimuth angle) during a work such as attachment and detachment of the blades 2. In one embodiment, the turning device includes a driving cylinder (an actuator such as a hydraulic cylinder, a pneumatic cylinder, and an electric cylinder) one end of which is coupled to the main shaft 7 or a component that rotates with the main shaft 7 via a hinge and the other end of which is coupled to the nacelle 13 via a hinge. In this case, it is possible to rotate the main shaft 7 by extending and contracting the driving cylinder.

Further, the hub 3 is arranged to have a tilt angle α by which the rotational axis line C of the rotor 5 is inclined upward (the upper side in FIG. 1) with respect to the horizontal direction toward the upwind side (the left side in FIG. 1). On the other hand, a blade 2 is mounted to the hub 3 so as to have a cone angle β by which the tip of the blade 2 is inclined toward the upwind side with respect to the plane L extending orthogonal to the rotational axis line C of the rotor 5.

As a result, the blade 2 is mounted to the hub 3 at the lower part of the hub 3 in the vertical direction so that the blade length direction of the blade 2 is inclined with respect to the vertical direction by the angle θ (= α + β) which is a sum of the tilt angle and the cone angle. That is, the blade 2 is mounted to the hub 3 while being inclined with respect to the vertical direction V so that the blade tip portion 22 side of the blade 2 is positioned in the front with respect to the blade root portion 20 side. Here, the front-rear direction of the wind turbine power generating apparatus 1 basically means the horizontal direction along the main shaft 7. In the case of a wind turbine power generating apparatus 1 which has a yaw rotational function for rotating the nacelle 13 in response to the wind direction, the front-rear direction means the horizontal direction along the wind direction (for instance, the main wind direction) at the time of the attachment and detachment work of the wind turbine blades 2. On the other hand, the horizontal direction orthogonal to the main shaft 7 is referred to as the lateral direction of the wind turbine power generating apparatus 1.

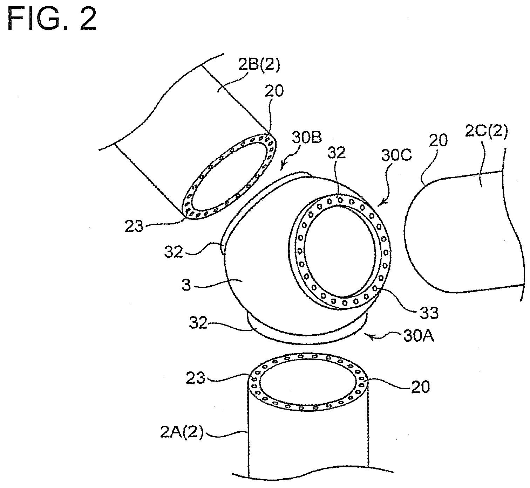

FIG. 2 is a perspective view in the vicinity of the blade root portions 20 of the blades 2 being attached or detached with respect to the hub 3 according to one embodiment.

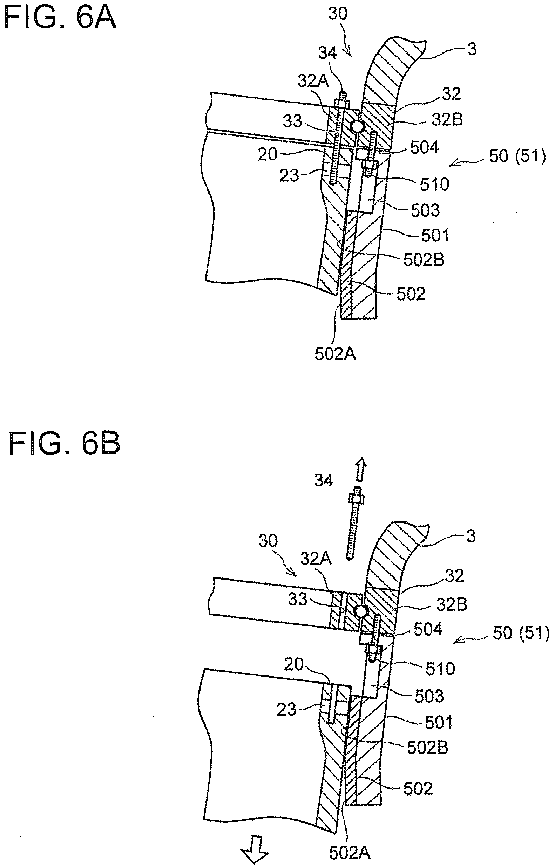

The hub 3 includes blade attachment portions 30 (30A, 30B, 30C) corresponding to the blades 2 (2A, 2B, 2C), respectively. In some embodiments as illustrated in FIG. 2, each blade attachment portion 30 includes a blade rotation ring 32 to which the blade root portion 20 of each blade 2 is to be coupled. Here, the exemplary configuration of the blade rotation ring 32 according to one embodiment is illustrated in FIGs. 6A and 6B. FIG. 6A is a cross-sectional view of a state where a blade is attached to a blade rotation ring, to which a first support is mounted. FIG. 6B is a cross-sectional view of a state where a blade is detached from the blade rotation ring, to which the first support is mounted. In one embodiment, from among the blade rotation ring 32, the first rotation ring to which the blade root portion 20 of each blade 2 is to be mounted is the inner race 32A of a pitch bearing, while the second rotation ring which is to be fixed on the hub 3 is the outer race 32B of a pitch bearing. Here, the blade rotation ring 32 may be configured such that the first rotation ring is the outer race 32B and the second rotation ring is the inner race 32A. The blade root portion 20 of each blade 2 and the blade rotation ring 32 of each blade-attachment portion 30 illustrated in FIGs. 2, 6A and 6B may be, for instance, coupled to each other by T-bolt fastening using studs 34 and nuts 23. In this case, a plurality of fastening bolts 34 that are inserted into holes 33 formed on the blade rotation ring 32 are screwed into a plurality of nuts 23 that are embedded into the blade root portion 20 at positions corresponding to the fastening positions of the studs 34, so that the blade root portion 20 is fixed to the blade rotation ring 32.

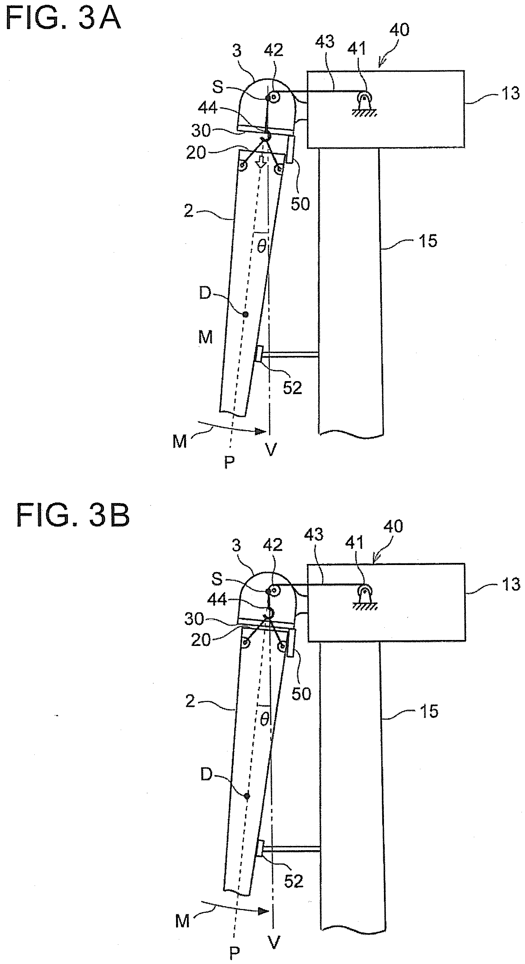

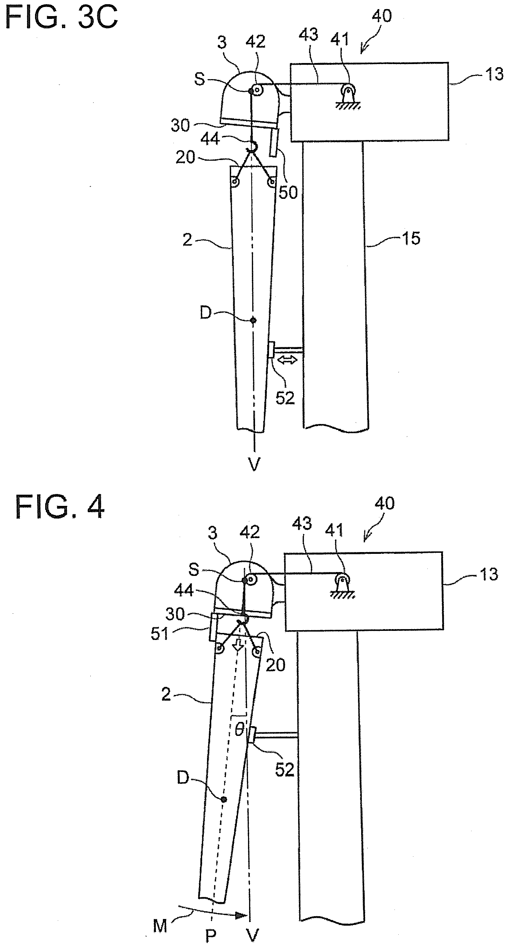

In reference to FIGs. 3A to 3C, the blade attaching and detaching method with respect to the blade attachment portion 30A will be described. FIG. 3A is a diagram for describing a holding step of a blade attaching and detaching method according to one embodiment. FIG. 3B is a diagram for describing a blade attaching and detaching step of the blade attaching and detaching method according to one embodiment. FIG. 3C is a diagram for describing an attitude adjusting step of the blade attaching and detaching method according to one embodiment.

The blade attaching and detaching method according to some embodiments includes a holding step of holding a blade 2 at the first attitude in which the blade length direction P of the blade 2 is inclined with respect to the vertical direction V, an attaching and detaching step of attaching or detaching the blade 2 with respect to the blade attachment portion of the hub 3, and an attitude adjusting step of adjusting the attitude of the blade 2.

In one embodiment, the blade 2 in the holding step illustrated in FIG. 3A is in a state of being suspended on the hub 3 by the lifting mechanism 40 so that the blade root portion 20 faces upward. A winch, a crane, or the like may be used as the lifting mechanism 40. For instance, the lifting mechanism 40 includes a reel 41, a pulley 42, a wire 43, and a hook 44. The reel 41 is configured to suspend and then lift or lower the blade 2 by winding up or down the wire-43. The reel 41 may be disposed on the nacelle 13, hub 3 or tower 15.

In the illustrated example, the reel 41 is disposed in the nacelle 13, and the pulley 42 is disposed in the hub 3. The wire 43 extends from the reel 41 in the nacelle 13, passes through the pulley 42 in the hub 3, and then hangs down from the pulley 42 toward the blade attachment portion 30. The hook 44 for suspending the blade 2 is connected to the far end side of the wire 43. The suspending point S at which the blade 2 is suspended on the wire 43 may be positioned inside the hub 3. Here, the reel 41 of the lifting mechanism 40 may be disposed on any one of the hub 3, nacelle 13, tower 15, or platform 17.

Further, in the holding step, a plurality of supports receive the support load of the blade 2 in the horizontal direction at positions different from one another in the blade length direction P of the blade 2, so that the blade 2 is held at the first attitude in which the blade length direction P of the blade 2 is inclined with respect to the vertical direction V. In one embodiment, the plurality of supports include the first support 50 disposed on the blade attachment portion 30 of the hub 3 and the second support 52 disposed on the blade tip portion 22 (see FIG. 1) side with respect to the first support 50.

As described above, due to the tilt angle α of the rotational axis line C of the rotor 5 and the cone angle P of the blade 2, the blade 2 is attached to the hub 3 so that the blade length direction P of the blade 2 is inclined by angle θ (= α + β) with respect to the vertical direction V Thus, when attaching or detaching the blade 2 with respect to the hub 3, it is necessary to hold the blade 2 at the first attitude in which the blade length direction P of the blade 2 is inclined by the angle θ with respect to the vertical direction V in order to cause the blade root portion 20 of the blade 2 to face the blade attachment portion 30 of the hub 3 accurately. However, when the blade 2 is intended to be held at the first attitude, the gravity center position D of the blade 2 is positioned in front of the suspending point S of the blade 2, which causes moment M (moment toward the tower 15 side) on the blade 2 due to the weight of the blade 2. Thus, the first support 50 and the second support 52 are used to receive the support load in the horizontal direction, the support load being the horizontal direction component of the moment M. As a result, it is possible to hold the blade root portion 20 of the blade 2 at the attitude suitable for attachment and detachment of the blade 2 with respect to the blade attachment portion 30 of the hub 3. Further, since the plurality of supports including the first support 50 and the second support 52 receive the support load in the horizontal direction from the blade 2, it is possible to stably hold the blade 2 at the first attitude and to prevent excessive load from being applied to part of the blade 2.

Further, as illustrated in FIG. 3A, in a case where the second support 52 is configured to contact the blade 2 at the blade tip portion 22 (see FIG. 1) side with respect to the gravity center position D of the blade 2, the first support 50 may be disposed so as to contact the first region at the tower 15 side, the first region being part of the outer circumferential surface of the blade root portion of the blade 2. In the case where the support 52 is configured to contact the blade tip portion 22 side with respect to the gravity center position D, the horizontal direction load caused by moment M acting on the blade 2 and moving toward the tower 15 side is applied to the blade root portion 20. Thus, providing the first support 50 configured to contact the first region at the tower 15 side makes it possible to receive the support load in the horizontal direction of the blade 2 at the at least two points including the first support 50 and the second support 52 and thus to hold the blade 2 stably at the first attitude.

In one embodiment, the attaching and detaching step illustrated in FIG. 3B includes attaching and detaching the blade 2 having been held at the first attitude in the holding step with respect to the blade attachment portion 30 positioned below the hub 3 in the substantially vertical direction. For instance, when detaching the blade 2, the blade root portion 20 is removed from the blade attachment portion 30 while the blade 2 is being held at the first attitude and then the blade 2 is lowered slightly by the lifting mechanism 40. As a result, the blade 2 is detached from the hub 3. Further, when attaching the blade 2, the blade 2 is suspended and lifted by the lifting mechanism 40 so that the blade root portion 20 is brought closer to the blade attachment portion 30 while the blade 2 is being held at the first attitude, and then the blade root portion 20 is attached to the blade attachment portion 30. As a result, the blade 2 is attached to the hub 3.

In one embodiment, the attitude adjusting step illustrated in FIG. 3C includes adjusting the attitude of the blade 2 between the first attitude and the second attitude by changing the horizontal-direction supporting position of at least one of the plurality of supports. The second attitude here means an attitude in which the angle between the blade length direction P of the blade 2 and the vertical direction V is different from that in the first attitude. When the blade 2 is suspended and lifted or lowered in a state where only the lifting mechanism 40 is supporting the weight of the blade 2, the second attitude may be such an attitude that the suspending point S of the blade 2 and the gravity center position D of the blade 2 are positioned in the same vertical line while the support load in the horizontal direction is not being applied to the blade 2. For instance, the second attitude is an attitude in which the blade length direction P of the blade 2 is along the vertical direction V. Also, the second attitude may be an attitude in which the angle between the blade length direction P of the blade 2 and the vertical direction V is larger than 0° and smaller than the angle θ of the first attitude. In the example illustrated in the drawing, the horizontal-direction supporting position of the second support 52 is changed to adjust the attitude of the blade 2. As described above, holding the blade 2 at the second attitude when the blade 2 is positioned away from the hub 3 in the attitude adjusting step makes it possible to suspend and lift or lower the blade 2 at an appropriate attitude. Further, changing the horizontal-direction supporting position of the second support 52 makes it possible to easily rotate the blade 2 around the suspending point S of the blade 2 or the first support 50. Thus, it is possible to adjust the blade 2 to a desired attitude.

In another embodiment, when the second support 52 is in contact with the blade root portion 20 side with respect to the gravity center position D of the blade 2 as illustrated in FIG. 4, the first support 51 in the holding step may be disposed so as to contact at least the second region on the side opposite to the tower 15, the second region being part of the outer circumferential surface of the blade root portion of the blade 2. FIG. 4 is a diagram for describing the holding step of a blade attaching and detaching method according to another embodiment. In the case where the second support 52 is configured to contact the blade root portion 20 side with respect to the gravity center position D, moment in a direction opposite to the tower 15 occurs on the blade root portion 20. Thus, providing the first support 51 configured to contact the second region on the opposite side of the tower 15 makes it possible to support the support load in the horizontal direction of the blade 2 at the at least two points including a point of the first support 51 and a point of the second support 52. As a result, it is possible to stably hold the blade 2 at the first attitude.

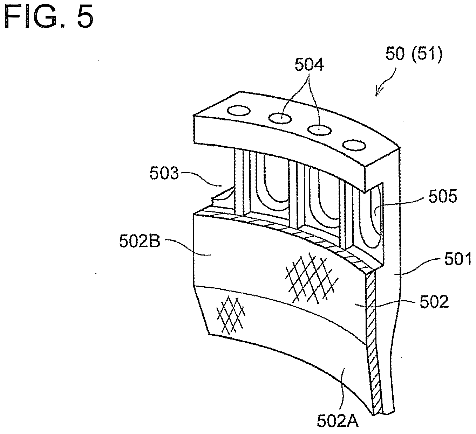

Now, the configuration of the first support 50 (51) will be described in detail. FIG. 5 is a perspective view of an exemplary configuration of the first support. FIGs. 6A and 6B are each a cross-sectional view of the first support mounted onto the blade rotation ring.

As illustrated in FIGs. 5, 6A and 6B, the first support 50 (51) includes a bracket body 501 which is to be attached to the first rotation bearing (the inner race 32A in FIGs. 6A and 6B) and a slide pad 502 disposed on a side facing the blade 2 of the bracket body 501.

In one embodiment, the bracket body 501 forms a portion of the first support 50 (51) that does not contact the blade 2, while the slide pad 502 forms a portion of the first support 50 (51) that contacts the blade 2. In this case, the slide pad 502 may include a contacting surface 502B having a curved cross-section in the radial direction of the blade root portion 20 of the blade 2 so as to contact a least a part of the outer circumferential surface of the blade root portion 20. For instance, the contacting surface 502B of the slide pad 502 may have a curvature radius equal to or larger than the radius of the external form of the blade root portion 20 of the blade 2. Also, the slide pad 502 may have an annular cross-section so that the contact surface 502B contacts the entire circumference of the circumferential surface of the blade root portion 20.

Further, the bracket body 501 may have high stiffness so that it is possible to receive the support load in the horizontal direction applied from the blade 2 held at the first attitude. For instance, the bracket body 501 includes metallic material such as steel. The slide pad 502 is formed of a material having high slidability so that the blade root portion 20 can be smoothly moved when the blade 2 is suspended and lifted or lowered in a state where the blade root portion 20 is in contact with the first support 50 (51). For instance, the slide pad 502 is formed of a material (resin or elastomer such as PEEK and PTFE) which has a low friction coefficient and high abrasion resistance as well as high slipping property. In another exemplary configuration, instead of the slide pad 502, a roller capable of rolling may be disposed on the inner side (the blade root portion 20 side) of the bracket body 501.

Further, the slide pad 502 may include a tapered surface 502A whose diameter increases toward the outer circumferential side of the bracket body 501 at the lower part of the contacting surface 502B. As a result, it is possible to prevent the lower edge of the first support 50 (51) from contacting the blade root portion 20 to damage the blade root portion 20 when moving the blade root portion 20 of the blade 2 closer to or further away from the first support 50 (51). Also, the tapered surface 502A of the slide pad 502 may be connected to the contacting surface 502B via a bend portion (curved portion or bent portion).

Furthermore, an end of the bracket body 501 to which the second rotation ring (the outer race 32B in FIGs. 6A and 6B) is to be attached includes bolt holes 504. On the other hand, the second rotation ring also includes bolt holes (not illustrated). Then, mounting bolts 510 are inserted into the bolt holes 504 of the bracket body 501 and the bolt holes of the second rotation ring to fasten the bracket body 501 and the second rotation ring to each other, so that the first support 50 (51) is attached to the second rotation ring. The bracket body 501 includes a space 503 formed adjacently to the bolt holes 504. This space 503 is in communication with the outer circumferential side of the bracket body 501 through the work holes 505 disposed on the outer circumferential face of the bracket body 501. Tools can be inserted through the work holes 505, so that it possible to fasten the mounting bolts 510 through the work holes 505 from the outer circumferential side of the bracket body 501 in a state where the support 50 (51) are in contact with the second rotation ring.

The first support 50 (51) having the above configuration receives the support load in the horizontal direction applied from the blade root portion 20. In one embodiment, FIG. 6A illustrates a state where the first support 50 (51) is mounted to the outer race 32B and the blade root portion 20 of the blade 2 is attached to the inner race 32A. FIG. 6B illustrates a case where the blade root portion 20 of the blade 2 is removed from the inner race 32A. When removing the blade 2 from the hub 3, in a state where the blade 2 is kept at the first attitude by means of the first support 50 (51) and the second support 52, the fastening bolt 34 is moved out from the inner race 32A and the blade root portion 20, and then the blade 2 is lowered slightly by the lifting mechanism 40. As a result, the blade root portion 20 is guided by the first support 50 (51) and thus it possible to separate the blade root portion 20 from the blade attachment portion 30 in a state where the first attitude is maintained. When attaching the blade 2 to the hub 3, the above procedure is carried out in the reverse order. Although a case here illustrates the blade 2 being attached to the inner race 32A and the first support 50 (51) being mounted to the outer race 32B, the blade 2 may be attached to the inner race 32B, and the first support 50 (51) may be mounted to the outer race 32A. Also, a plurality of first supports 50 (51) may be provided in the circumferential direction of the first rotation ring with intervals between one another.

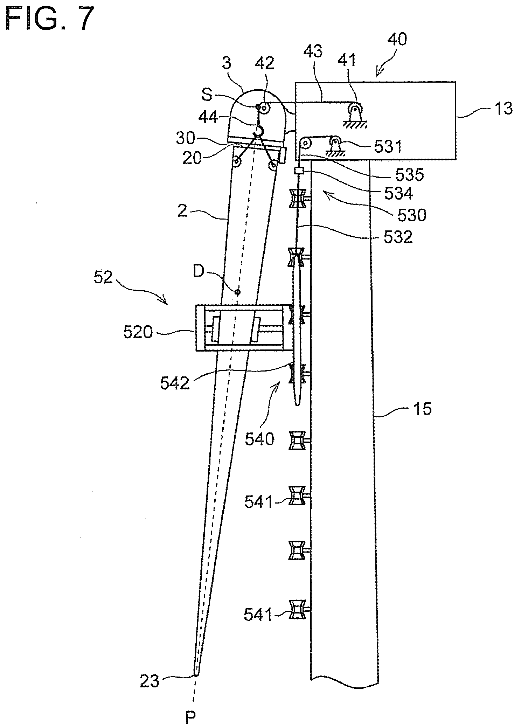

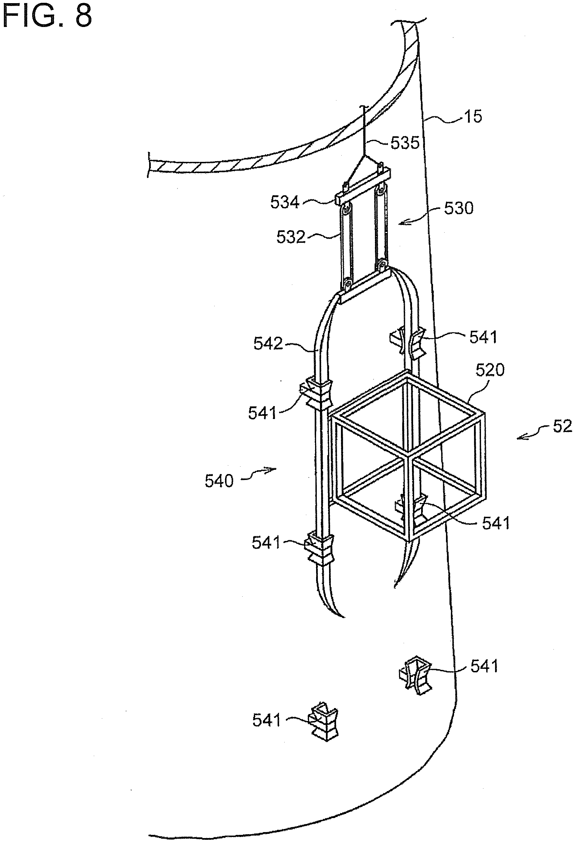

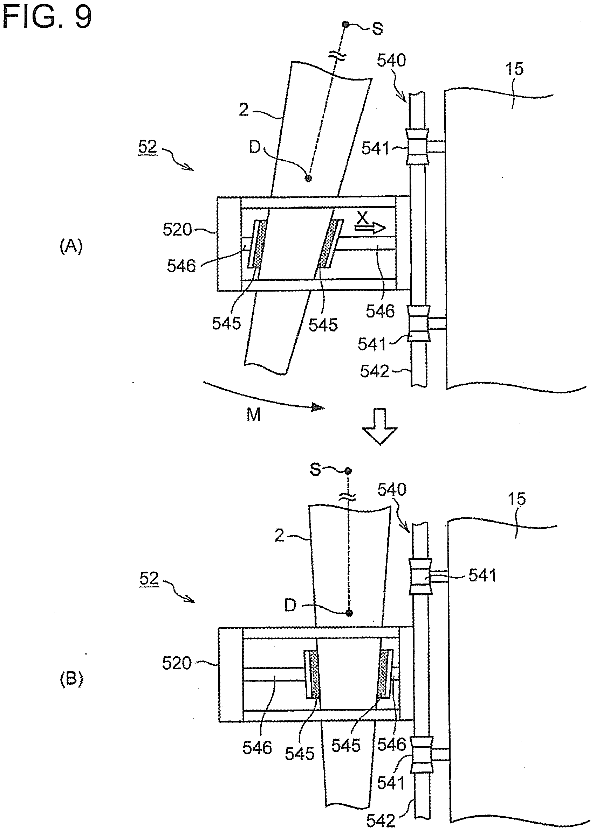

Next, in reference to FIGs. 7, 8, and 9, the configuration of the second support 52 will be described in detail. FIG. 7 is a side view of an exemplary configuration of a second support. FIG. 8 is a perspective view of an exemplary configuration of the second support. FIG. 9 is a diagram for describing an attitude adjusting step by the second support.

In some embodiments, the second support 52 illustrated in FIGs. 7 and 8 is configured to receive the support load in the horizontal direction applied from the blade 2 being suspended by the lifting mechanism 40. Also, the second support 52 is configured to restrict swinging movement in the horizontal direction of the blade 2. In one embodiment, the second support 52 includes a frame 520 disposed at least between the blade 2 and the tower 15. The frame 520 may be configured to surround the circumference of the blade 2 in the suspended state. Alternatively, it may be configured to have an edged U-shape whose corners are right angles so that the frame is partially open.

Further, the second support 52 may include a moving mechanism 530 for moving the frame 520 corresponding to the movement of the blade 2 being moved along the tower 15 by the lifting mechanism 40, and a guide part 540 for guiding the frame 520 along the tower 15.

For instance, the moving mechanism 530 includes a winch 531 attached to the frame 520 and a frame lifting wire 532 wound around the winch 531. Further, the moving mechanism 530 is configured such that the position of the frame 520 in the vertical direction is adjusted by changing the length of wire wound up by the winch 531. Further, as illustrated in FIG. 8, a pulley balance 534 for suspending the frame 520 may be provided. A suspending wire 535 may be connected to the pulley balance 534 so that the frame 520 is lifted or lowered along with the pulley balance 534 by means of the winch 531. Here, the pulley balance 534 is fixed on the upper end of the nacelle 13, the hub 3 or the tower 15 via the suspending wire 535.

For instance, the guide part 540 includes a plurality of engaging parts 541 mounted to the tower 15, and at least one guide rail 542 attached to the frame 520 of the second support 52. The engaging parts 541 are mounted to the outer circumferential surface of the tower 15 and the plurality of the same are arranged so as to be separated from one another. Each engagement part 541 guides the frame 520 to be lifted and lowered along the outer circumferential surface of the tower by contacting the guide rail 542. The guide rails 542 are configured to contact the plurality of engaging parts 541 in series as the frame 520 moves along the tower 15. That is, upon movement of the frame 520, the guide rails 542 are configured to be passed onto the next engaging part 541 from one engaging part 541, the two engaging parts 541 being adjacent to each other in the vertical direction, so that the guide rails 542 are guided to be lifted or lowered along the outer circumferential surface of the tower 15.

As illustrated in FIGs. 7 and 9, in some embodiments, the second support 52 further includes an actuator 546 for moving supporting parts 545 which are in contact with the blade 2 in the horizontal direction so as to rotate the blade 2 around the suspending point S and adjust its attitude between the first attitude and the second attitude. When detaching the blade 2, the blade 2 is kept at the first attitude immediately after the blade root portion 20 is removed from the hub 3. Thus, the gravity center position D of the blade 2 is not below the suspending point S in the vertical direction as illustrated in FIG. 9(A), which causes the moment M around the suspending point S to be applied to the blade 2. Thus, while supporting the moment M acting on the blade 2 by means of the supporting parts 545, the actuator 546 is moved as illustrated in FIG. 9(B) in the X direction from the drawing so that the blade 2 is brought into the second attitude in which the gravity center position D is just under the suspending point S in the vertical direction. As a result, the blade 2 becomes stable at the second attitude in which the gravity center position D of the blade 2 is positioned just under the suspending point S in the vertical direction. On the other hand, when attaching the blade 2, the above operation may be carried out in the reverse order.

As described above, the supporting parts 545 are moved in the horizontal direction (in the direction of the arrow X) by the actuator 546 while receiving moment M acting on the blade 2 at the supporting parts 545, so that it is possible to rotate the blade 2 around the suspending point S gradually and to adjust the gravity center position D and attitude of the blade 2 stably. Further, the supporting parts 545 are merely configured to receive the moment M acting on the blade 2, and thus the weight of the blade 2 is still supported by the lifting mechanism 40 (see FIG. 7) suspending the blade 2. Therefore, it is possible to prevent excessive load from being applied to the second support 52.

In some embodiments, the blade attaching and detaching method further includes a lifting/lowering step of lifting or lowering the blade 2 along the tower 15 using the lifting mechanism 40 disposed in the hub 3 or the nacelle 13.

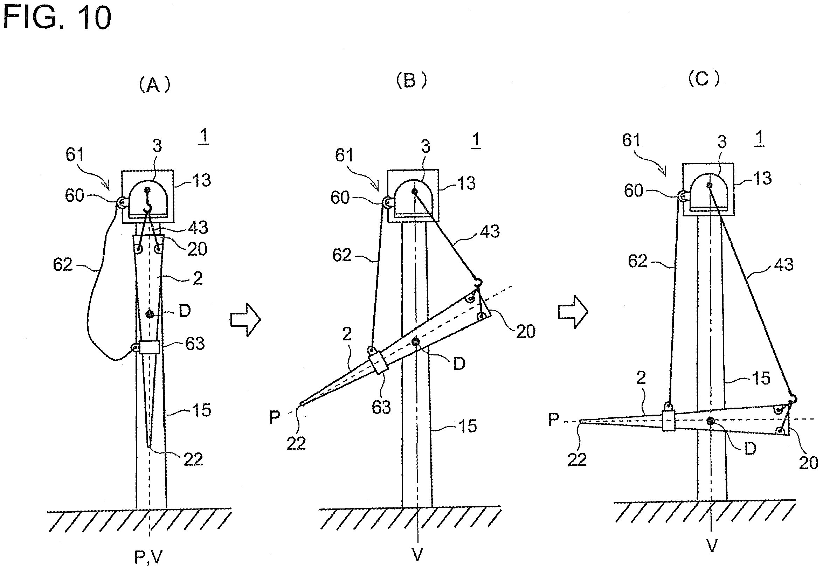

In one embodiment, as illustrated in FIG. 10, the lifting/lowering step includes a vertical lifting/lowering step, a horizontal lifting/lowering step, and a rotating step. FIG. 10 is a diagram for describing a lifting/lowering step of a blade attaching and detaching method according to one embodiment, where (A) to (C) illustrate the procedures of suspending and lowering the blade 2. FIG. 10 illustrates a case where the blade 2 is rotated in the rotating step using a rotary mechanism 60 which includes an auxiliary winch 61, an auxiliary wire 62, and a blade-tip holding unit 63. The auxiliary winch 61 is disposed on the side of any one of the hub 3, the nacelle 13, or the upper part of the tower 15, being configured to wind up or down the auxiliary wire 62. The blade-tip holding unit 63 is disposed on the blade tip portion 22 side of the blade 2 and the auxiliary wire 62 is attached thereto. The position of the blade tip portion 22 in the height direction can be adjusted by winding up or down the auxiliary wire 62 by the auxiliary winch 61, the auxiliary wire 62 being attached to the blade tip portion 22 side of the blade 2 via the blade-tip holding unit 63.

In the vertical lifting/lowering step illustrated in FIG. 10(A), the blade 2 is suspended and lowered by the lifting mechanism 40 (see FIG. 3A to 3C) in a state where the blade 2 is being held at the second attitude in which the blade length direction P is along the vertical direction V The rotating step illustrated in FIG. 10(B) includes rotating the blade 2 from the second attitude to the third attitude in which the blade length direction P is along the horizontal direction. At this time, the blade 2 may be rotated within the plane L (see FIG. 1) orthogonal to the rotational axis line C of the rotor 5 so that the blade 2 does not interfere with the tower 15. For instance, in the rotating step, the lifting mechanism 40 adjusts the length of the wire 43, while the auxiliary winch 61 adjusts the length of the auxiliary wire 62, so that the blade 2 is rotated by changing the relative positions in the height direction of the blade root portion 20 and the blade tip portion 22. In the horizontal lifting/lowering step illustrated in FIG. 10(C), the positions in the height direction of the blade root portion 20 and the blade tip portion 22 are substantially matched, and then the blade 2 is suspended and lowered in the third attitude in which the blade length direction P of the blade 2 is along the substantially horizontal direction. Also, when lifting the blade 2, it is lifted by carrying out the above operation in the reverse order. As a result, it is possible to attach or detach the blade 2 with respect to the hub 3 by changing the attitude of the blade 2 while preventing contact between an end of the blade 2 and the platform.

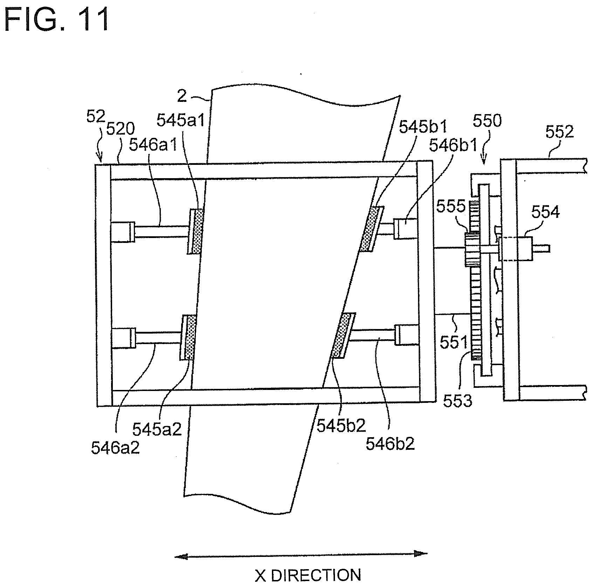

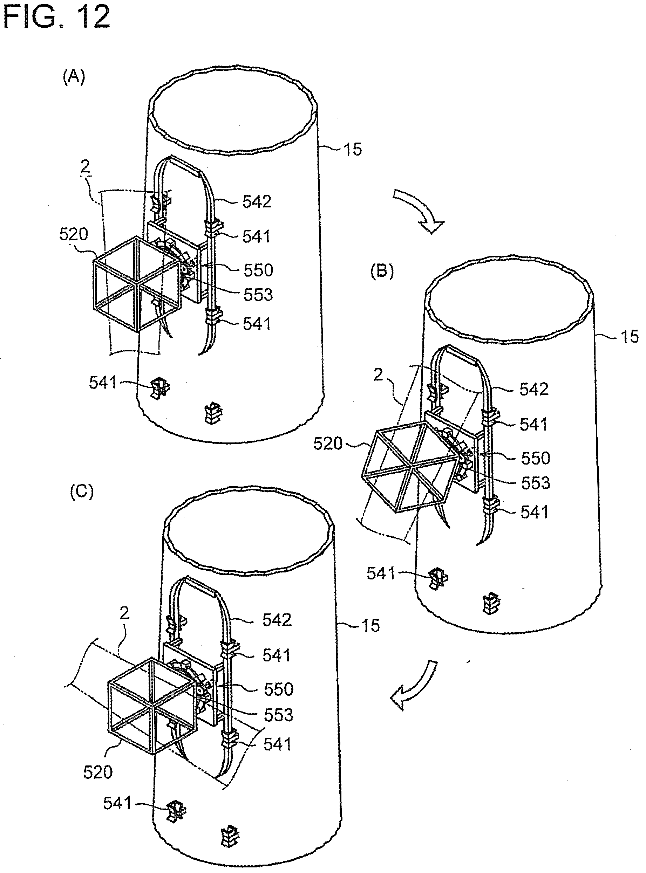

Further, when using the second support 52 described in FIGs. 7 to 9, the rotation step may include rotating the second support to follow the rotation of the blade 2 by the rotary mechanism 550 illustrated in FIGs. 11 and 12. FIG. 11 is a side view of an exemplary configuration of the second support having a rotary mechanism. FIG. 12 is a diagram for describing a rotating procedure for the second support 52 using the rotary mechanism.

As illustrated in FIG. 11, in some embodiments, the second support 52 further includes a rotary mechanism 550 for rotating the frame 520 around the rotational shaft 551 which extends in the horizontal direction. The rotary mechanism 550 is disposed between the frame 520 and the guide portion 110 and configured to rotate the frame 520 with respect to the guide portion 110 around the rotational shaft 551 which extends in the horizontal direction.

In one embodiment, the rotary mechanism 550 includes a rotary disc 553 attached to a frame attachment part 552 fixed on the guide rail 542, and a turning motor 554 for rotating the rotary disc 553.

The rotary disc 553 is mounted to the frame attachment part 552 via a plurality of disc supporting parts 143 to be freely rotatable. A rotary gear (pinion gear) 555 is coupled to the turning motor 554, the rotary gear 555 engaging with a gear of the rotary disc 553. By the turning motor 554 being driven, the rotary gear 555 rotates and the rotary disc 553 engaging with the rotary gear 555 rotates around the rotational shaft 551.

Further, in the exemplary configuration illustrated in FIG. 11, a pair of supporting parts 545a1, 545a2 and a pair of actuators 546a1, 546a2 are disposed on one side, while another pair of supporting parts 545b1, 545b2 and another pair of actuators 546b1, 546b2 are disposed on the other side, the two sides opposed to each other across the blade 2 in the radial direction of the tower 15. The above supporting parts 545a1, 545a2, 545b1, 545b2, and actuators 546a1, 546a2, 546b1, 546b2 are mounted to the frame 520. It is possible to adjust the angle between the blade 2 and the vertical direction by adjusting the amount of extension of the actuators 546a1, 546a2 separately from that of the actuators 546b1, 546b2, and vice versa. As a result, it is possible to rotate the blade 2 around the suspending point S gradually.

Now, in reference to FIG. 12, the rotating procedure for the blade in the suspending and lowering work of the blade 2 will be described. FIG. 12 is a diagram for describing the rotating procedure for the blade and the frame.

The blade 2 is first removed from the blade attachment portion 30 positioned below the hub 3 in the vertical direction, and then suspended and lowered along the vertical direction, thereby being inserted into the frame 520 that has been waiting at the upper part of the tower 15. Alternatively, the frame 520 may be ascended along the tower 15 so that the blade 2 attached to the blade attachment portion 30 positioned below the hub 3 in the vertical direction is inserted into the frame 520. Then, as illustrated in FIG. 12(A), while the blade 2 is being inserted into the frame 520, the blade 2 is lowered by the lifting mechanism 40 (see FIG. 1). At this time, the attitude of the blade 2 may be adjusted by moving the supporting part 545 in the horizontal direction by the actuator 546 while receiving moment load M around the suspending point S at the supporting part 545. Further, when suspending and lowering the blade 2 by the lifting mechanism 40, the frame 520 is lowered by the moving mechanism 530 following the lowering movement of the blade 2. At this time, the guide rails 542 attached to the frame 520 contact the engaging parts 541 in series, so that the frame 520 is guided to be lifted or lowered along the outer circumferential surface of the tower 15.

Once the blade 2 and the frame 520 are lowered halfway the tower 15, the movement of the blade 2 and the frame 520 in the vertical direction is halted and the process moves onto the rotating work. In the rotating work, the rotary mechanism 550 is used to rotate the frame 520 so as to follow the rotation of the blade 2. As illustrated in FIG. 12(B), the rotary mechanism 550 drives the turning motor 554 to rotate the rotary disc 553, and thereby rotates the frame 520 coupled to the rotary disc 553 via the rotational shaft 551. Then, as illustrated in FIG. 12(C), the frame 520 having been rotated by substantially 90° from the vertical direction in accordance with the blade 2 also having been rotated by substantially 90° so as to be in the horizontal attitude is further lowered in the rotated state following the blade 2. Accordingly, the blade 2 is placed on the platform in the horizontal attitude. With the rotary mechanism 550 provided for rotating the frame 520 around the rotational shat 551 extending along the horizontal direction with respect to the guide rail 542, it is possible to rotate the frame 520 following the change in attitude of the blade 2 and thus to prevent the weight of the blade 2 from being applied to the frame 520 beyond the tolerable range. Thus, it becomes possible to adjust the attitude of the blade 2 in a state where the frame 520 is disposed, and thus to facilitate the transferring work of the blade 2.

As described above, according to the above embodiment, it is possible to attach and detach the blade 2 in an appropriate attitude with respect to the hub 3 by attaching and detaching the blade 2 in a state where the blade 2 is held at the first attitude in which the blade length direction P of the blade 2 is inclined with respect to the vertical direction V when attaching or detaching the blade 2 with respect to the hub 3. Further, when holding the blade 2 at the first attitude, the support load in the horizontal direction applied from the blade 2 is received by a plurality of supports (for instance, the first support 50, 51 and the second support 52) at positions different from one another in the blade length direction P of the blade 2. As a result, it is possible to stably hold the blade 2 at the first attitude and to prevent excessive load from being applied to part of the blade 2. Further, when the blade 2 is positioned away from the hub 3, it is possible to suspend and lift or lower the blade 2 in an appropriate attitude by holding the blade 2 at the second attitude which is different from the first attitude.

Embodiments of the present invention were described in detail above, but the present invention is not limited thereto, and various amendments and modifications may be implemented within a scope that does not depart from the present invention.

For instance, although the first support 50 (51) illustrated in FIGs. 5, 6A, and 6B is of a bracket type which contacts the blade root portion 20, the configuration of the first support is not limited to this.

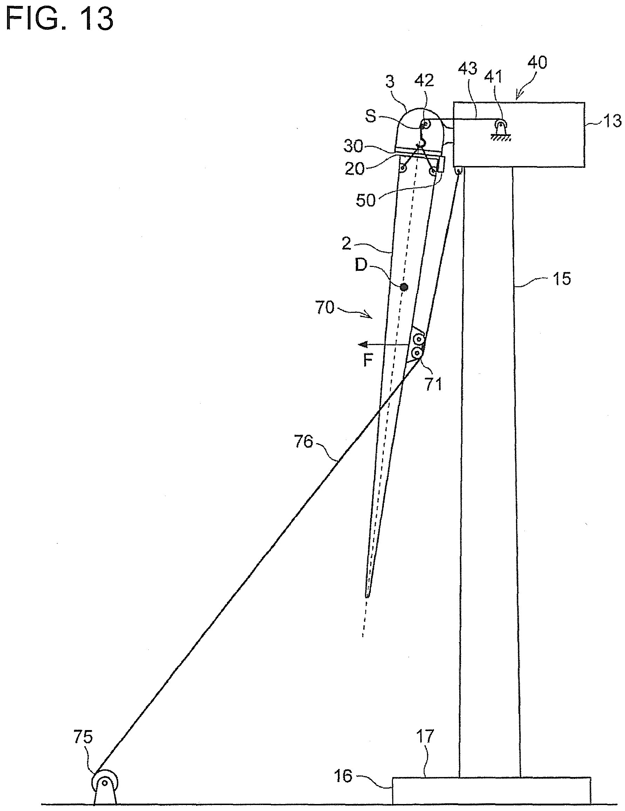

Further, although the second support 52 illustrated in FIGs. 7 to 12 adjusts the attitude using the actuator, the configuration of the second support is not limited to this. For instance, as illustrated in FIG. 13, the second support 70 includes a wire locking part 71 attached to the blade 2 at the blade tip portion 22 side with respect to the first support 51. A winch (or crane) 75 is installed on the land, on the ocean, or on a structure floating on the ocean. A second wire 76 wound around the winch 75 is connected to the nacelle 13, the hub 3, or the upper part of the tower 15 at one end via the wire locking part 71. Then, in the attitude adjusting step, the length of the second wire 76 is adjusted by the winch 75, so that force F in the horizontal direction is applied to the blade 2 from the wire locking part 71, thereby adjusting the attitude of the blade 2 between the first attitude and the second attitude. As a result, it is possible to adjust the attitude of the blade 2 between the first attitude and the second attitude with a simplified configuration.

## Claims

1. A blade attaching and detaching method for a wind turbine (1) which includes at least one blade (2), a hub (3) to which the blade (2) is attachable, a nacelle (13) supporting the hub (3) to be freely rotatable, and a tower (15) to which the nacelle (13) is mounted at an upper end of the tower (15), the blade attaching and detaching method comprising:
a holding step of holding the blade (2), in a state where the blade is being suspended so that a blade root portion (20) of the blade (2) is facing upward, at a first attitude in which a blade length direction of the blade (2) is inclined with respect to a vertical direction, by receiving support load in a horizontal direction applied from the blade by a plurality of supports (50,51,52) at positions varied from one another in the blade length direction of the blade;
an attaching/detaching step of attaching or detaching the blade (2) with respect to a blade attachment portion (30) positioned at a lower part of the hub (3) in a substantially vertical direction, the blade being held at the first attitude;
an attitude adjusting step of adjusting an attitude of the blade (2) between the first attitude and a second attitude in which an angle between the blade length direction of the blade and the vertical direction is different from that in the first attitude, by changing a supporting position in the horizontal direction of at least one of the plurality of supports (50,51,52); and
a lifting/lowering step of lifting or lowering the blade (2) along the tower (15) using a lifting mechanism (40) including a winch or a crane;
the method being **characterized in that** the plurality of supports include a first support (50) disposed on the blade attachment portion (30) so as to contact at least a part of the blade root portion (20) of the blade (2), and **in that**, in the holding step, the first support (50) receives the support load in the horizontal direction applied from the blade root portion (20) of the blade (2).

2. The blade attaching and detaching method for a wind turbine (1) according to claim 1,
wherein the first support (50) is disposed so as to contact at least a first region on a tower side, the first region being part of an outer circumferential surface of the blade root portion (20) of the blade (2),
wherein the plurality of supports (50,51,52) include a second support (52) which contacts the blade at a blade tip portion (22) side with respect to a gravity center position (D) of the blade (2), and
wherein, in the attitude adjusting step, the attitude of the blade (2) is adjusted by changing the supporting position in the horizontal direction of the second support (52).

3. The blade attaching and detaching method for a wind turbine (1) according to claim 1,
wherein the first support (51) is disposed so as to contact at least a second region on a side opposite to the tower (15), the second region being part of the outer circumferential surface of the blade root portion (20) of the blade (2),
wherein the plurality of supports include a second support (52) which contacts the blade (2) at a blade root portion (20) side with respect to a gravity center position (D) of the blade (2), and
wherein, in the attitude adjusting step, the attitude of the blade (2) is adjusted by changing the supporting position in the horizontal direction of the second support (52).

4. The blade attaching and detaching method for a wind turbine (1) according to any one of claims 1 to 3,
wherein the lifting/lowering step includes: a vertical lifting/lowering step of lifting or lowering the blade (2) in a state where the blade is maintained at the second attitude in which the blade length direction is along the substantially vertical direction; a horizontal lifting/lowering step of lifting or lowering the blade in a state were the blade is maintained at a third attitude in which the blade length direction is along the horizontal direction; and a rotating step of rotating the blade between the vertical lifting/lowering step and the horizontal lifting/lowering step, and
wherein, in the lifting/lowering step,
the blade is lifted or lowered by carrying out the vertical lifting/lowering step when the blade (2) is at an upper part of the tower (15), and
the blade (2) is lifted or lowered by carrying out the horizontal lifting/lowering step when the blade (2) is at a lower part of the tower (15).

5. The blade attaching and detaching method for a wind turbine (1) according to any one of claims 1 to 4,
wherein the plurality of supports (50,51,52) include a first support (50) disposed on the blade attachment portion (30) so as to contact at least a part of the outer circumferential surface of the blade root portion (20) of the blade (2), and a second support (52) disposed on a blade tip portion (22) side with respect to the first support (50) and configured to receive the support load in the horizontal direction and to restrict swinging movement in the horizontal direction of the blade (2), the blade being in a state of being suspended by the lifting mechanism (40),
wherein the blade attaching and detaching method further comprises a moving step of moving the second support in accordance with movement of the blade (2) along the tower (15) in the lifting/lowering step, and
wherein, in the moving step, the second support is moved along the tower while being guided by a guide part.

6. The blade attaching and detaching method for a wind turbine (1) according to claim 5,
wherein, in the rotating step, the second support (52) is rotated along with rotation of the blade.

7. The blade attaching and detaching method for a wind turbine according to claim 5 or 6,
wherein the second support (52) includes a horizontal-direction adjusting mechanism configured to adjust a distance between the tower and the second support in the horizontal direction, and
wherein, in the attitude adjusting step, the horizontal-direction adjusting mechanism of the second support (52) is used to adjust the attitude of the blade between the first attitude and the second attitude.

8. The blade attaching and detaching method for a wind turbine (1) according to claim 5 or 6,
wherein, the second support is connected to a wire of a crane or a winch disposed on land, on a ship, or on a structure floating on ocean, and
wherein, in the attitude adjusting step, the attitude of the blade (2) is adjusted between the first attitude and the second attitude by adjusting length of the wire.

9. The blade attaching and detaching method for a wind turbine (1) according to claim 5 or 6,
wherein, in the rotating step, while being suspended at two points including a point at a blade root portion side and a point at a blade tip portion side via two wires, the blade is rotated by adjusting length of each of the two wires by means of the lifting mechanism disposed in the hub of the nacelle.

10. A blade attaching and detaching apparatus for a wind turbine which includes at least one blade (2), a hub (3) to which the blade (2) is attachable via a bearing including a first rotation ring to which the blade root portion of the blade is attachable and a second rotation ring mounted on the hub to be rotatable relative to the first rotation ring, a nacelle (13) supporting the hub (3) to be freely rotatable, and a tower (15) to which the nacelle (13) is mounted at an upper end of the tower (15), the blade attaching and detaching apparatus comprising:
a lifting mechanism (40) configured to lift or lower the blade (2) in a state where the blade is being suspended so that a blade root portion (20) of the blade (2) faces upward; and
a plurality of supports (50,51,52) configured to, in a state where the blade (2) is being suspended by the lifting mechanism (40), receive support load in the horizontal direction applied from the blade (2) at positions varied from one another in a blade length direction of the blade (2),
wherein one of the supports (50,51,52) is configured to be capable of adjusting the attitude of the blade (2) between a first attitude in which the blade is inclined with respect to the vertical direction and a second attitude in which an angle between a blade length direction of the blade and the vertical direction is different from that of the first attitude by changing supporting positions in the horizontal direction of the blade, and
**characterized in that** the plurality of supports include a first support configured so as to be attachable to the second rotation ring to contact at least a part of the blade root portion of the blade and to receive the support load in the horizontal direction applied from the blade root portion of the blade.

11. The blade attaching and detaching apparatus for a wind turbine according to claim 10,
wherein the plurality of supports (50,51,52) include a first support (50) disposed on the blade attachment portion (30) so as to contact at least a part of an outer circumferential surface of the blade root portion (20) of the blade (2), and a second support (52) disposed on a blade tip portion (22) side with respect to the first support (50) and configured to receive the support load in the horizontal direction and to restrict swinging movement in the horizontal direction of the blade, the blade (2) being in a state of being suspended by the lifting mechanism (40), and
wherein the blade attaching and detaching apparatus further comprises: a moving mechanism (530) configured to move the second support (52) in accordance with movement of the blade along the tower (15) by the lifting mechanism (40); and a guide part (510) configured to guide the second support (52) so that the second support moves along the tower (15) by the moving mechanism (530).

## Patentansprüche

1. Flügelanbau- und -abbau-Verfahren für eine Windturbine (1), die mindestens einen Flügel (2), eine Nabe (3), an der der Flügel (2) angebaut werden kann, eine Gondel (13), die die Nabe (3) frei drehbar stützt, und einen Mast (15), an dem die Gondel (13) am oberen Ende des Mastes (15) montiert ist, enthält, wobei das Flügelanbau- und -abbau-Verfahren umfasst:
einen Halteschritt des Haltens des Flügels (2) in einem Zustand, in dem der Flügel so aufgehängt ist, dass ein Flügelwurzelabschnitt (20) des Flügels (2) nach oben weist, in einer ersten Stellung, in der eine Flügellängsrichtung des Flügels (2) mit Bezug auf eine vertikale Richtung geneigt ist, durch Aufnehmen einer durch den Flügel ausgeübten Stützlast in einer horizontalen Richtung durch mehrere Stützen (50, 51, 52) an Positionen, die in der Flügellängsrichtung des Flügels voneinander abweichen,
einen Anbau-/Abbauschritt des Anbauens oder Abbauens des Flügels (2) in Bezug auf einen Flügelanbauabschnitt (30), der an einem unteren Teil der Nabe (3) in einer im Wesentlichen vertikalen Richtung positioniert ist, wobei der Flügel in der ersten Stellung gehalten wird,
einen Stellungsjustierungsschritt des Justierens einer Stellung des Flügels (2) zwischen der ersten Stellung und einer zweiten Stellung, in der ein Winkel zwischen der Flügellängsrichtung des Flügels und der vertikalen Richtung ein anderer ist als der in der ersten Stellung, durch Ändern einer Stützposition in der horizontalen Richtung von mindestens einer der mehreren Stützen (50, 51, 52), und
einen Anhebe-/Absenkschritt des Anhebens oder Absenkens des Flügels (2) entlang des Mastes (15) unter Verwendung eines Hebemechanismus (40), der eine Winde oder einen Kran enthält,
wobei das Verfahren **dadurch gekennzeichnet ist, dass** die mehreren Stützen eine erste Stütze (50) enthalten, die so an dem Flügelanbauabschnitt (30) angeordnet ist, dass sie mindestens einen Teil des Flügelwurzelabschnitts (20) des Flügels (2) berührt, und dadurch, dass die erste Stütze (50) in dem Halteschritt die durch den Flügelwurzelabschnitt (20) des Flügels (2) ausgeübte Stützlast in der horizontalen Richtung aufnimmt.

2. Flügelanbau- und -abbau-Verfahren für eine Windturbine (1) nach Anspruch 1,
wobei die erste Stütze (50) so angeordnet ist, dass sie mindestens eine erste Region auf einer Mastseite berührt, wobei die erste Region Teil einer Außenumfangsfläche des Flügelwurzelabschnitts (20) des Flügels (2) ist,
wobei die mehreren Stützen (50, 51, 52) eine zweite Stütze (52) enthalten, die den Flügel auf einer Flügelspitzenabschnitt (22)-Seite mit Bezug auf eine Masseschwerpunktposition (D) des Flügels (2) berührt, und
wobei in dem Stellungsjustierschritt die Stellung des Flügels (2) justiert wird, indem die Stützposition der zweiten Stütze (52) in der horizontalen Richtung geändert wird.

3. Flügelanbau- und -abbau-Verfahren für eine Windturbine (1) nach Anspruch 1,
wobei die erste Stütze (51) so angeordnet ist, dass sie mindestens eine zweite Region auf einer Seite gegenüber des Mastes (15) berührt, wobei die zweite Region Teil der Außenumfangsfläche des Flügelwurzelabschnitts (20) des Flügels (2) ist,
wobei die mehreren Stützen eine zweite Stütze (52) enthalten, die den Flügel (2) auf einer Flügelwurzelabschnitt (20)-Seite mit Bezug auf eine Masseschwerpunktposition (D) des Flügels (2) berührt, und
wobei in dem Stellungsjustierschritt die Stellung des Flügels (2) justiert wird, indem die Stützposition der zweiten Stütze (52) in der horizontalen Richtung geändert wird.

4. Flügelanbau- und -abbau-Verfahren für eine Windturbine (1) nach einem der Ansprüche 1 bis 3,
wobei der Anhebe-/Absenkschritt enthält: einen vertikalen Anhebe-/Absenkschritt des Anhebens oder Absenkens des Flügels (2) in einem Zustand, in dem der Flügel in der zweiten Stellung gehalten wird, in der die Flügellängsrichtung entlang der im Wesentlichen vertikalen Richtung verläuft, einen horizontalen Anhebe-/Absenkschritt des Anhebens oder Absenkens des Flügels in einem Zustand, in dem der Flügel in einer dritten Stellung gehalten wird, in der die Flügellängsrichtung entlang der horizontalen Richtung verläuft, und einen Rotationsschritt des Rotierens des Flügels zwischen dem vertikalen Anhebe-/Absenkschritt und dem horizontalen Anhebe-/Absenkschritt, und
wobei in dem Anhebe-/Absenkschritt
der Flügel angehoben oder abgesenkt wird, indem der vertikale Anhebe-/Absenkschritt ausgeführt wird, wenn sich der Flügel (2) an einem oberen Teil des Mastes (15) befindet, und
der Flügel (2) angehoben oder abgesenkt wird, indem der horizontale Anhebe-/Absenkschritt ausgeführt wird, wenn sich der Flügel (2) an einem unteren Teil des Mastes (15) befindet.

5. Flügelanbau- und -abbau-Verfahren für eine Windturbine (1) nach einem der Ansprüche 1 bis 4,
wobei die mehreren Stützen (50, 51, 52) eine erste Stütze (50) enthalten, die so an dem Flügelanbauabschnitt (30) angeordnet ist, dass sie mindestens einen Teil der Außenumfangsfläche des Flügelwurzelabschnitts (20) des Flügels (2) berührt, und eine zweite Stütze (52) enthalten, die auf einer Flügelspitzenabschnitt (22)-Seite mit Bezug auf die erste Stütze (50) angeordnet ist und dafür konfiguriert ist, die Stützlast in der horizontalen Richtung aufzunehmen und eine Schwingbewegung in der horizontalen Richtung des Flügels (2) zu begrenzen, wobei sich der Flügel in einem Zustand befindet, in dem er an dem Hebemechanismus (40) hängt,
wobei das Flügelanbau- und -abbau-Verfahren des Weiteren einen Bewegungsschritt zum Bewegen der zweiten Stütze gemäß einer Bewegung des Flügels (2) entlang des Mastes (15) in dem Anhebe-/Absenkschritt umfasst, und
wobei in dem Bewegungsschritt die zweite Stütze entlang des Mastes bewegt wird, während sie durch einen Führungsteil geführt wird.

6. Flügelanbau- und -abbau-Verfahren für eine Windturbine (1) nach Anspruch 5,
wobei in dem Rotationsschritt die zweite Stütze (52) zusammen mit der Rotation des Flügels rotiert wird.

7. Flügelanbau- und -abbau-Verfahren für eine Windturbine nach Anspruch 5 oder 6,
wobei die zweite Stütze (52) einen Horizontalrichtungsjustiermechanismus enthält, der dafür konfiguriert ist, eine Distanz zwischen dem Masten und der zweiten Stütze in der horizontalen Richtung zu justieren, und
wobei in dem Stellungsjustierschritt der Horizontalrichtungsjustiermechanismus der zweiten Stütze (52) dafür verwendet wird, die Stellung des Flügels zwischen der ersten Stellung und der zweiten Stellung zu justieren.

8. Flügelanbau- und -abbau-Verfahren für eine Windturbine (1) nach Anspruch 5 oder 6,
wobei die zweite Stütze mit einem Seil eines Krans oder einer Winde verbunden ist, der bzw. die an Land, auf einem Schiff oder auf einer Struktur, die auf dem Meer schwimmt, angeordnet ist, und
wobei in dem Stellungsjustierschritt die Stellung des Flügels (2) zwischen der ersten Stellung und der zweiten Stellung durch Justieren der Länge des Seils justiert wird.

9. Flügelanbau- und -abbau-Verfahren für eine Windturbine (1) nach Anspruch 5 oder 6,
wobei in dem Rotationsschritt, während des Aufhängens an zwei Punkten, einschließlich eines Punktes auf einer Flügelwurzelabschnittseite und eines Punktes auf einer Flügelspitzenabschnittsseite, mittels zweier Seile, der Flügel durch Justieren der Länge eines jeden der zwei Seile mittels des Hebemechanismus, der in der Nabe der Gondel angeordnet ist, rotiert wird.

10. Flügelanbau- und -abbau-Vorrichtung für eine Windturbine, die enthält:
mindestens einen Flügel (2), eine Nabe (3), an der der Flügel (2) über ein Lager angebaut werden kann, das einen ersten Drehring enthält, der an dem der Flügelwurzelabschnitt des Flügels angebracht werden kann, und einen zweiten Drehring enthält, der an der Nabe montiert ist, um relativ zu dem ersten Drehring gedreht werden zu können, eine Gondel (13), die die Nabe (3) frei drehbar stützt, und einen Mast (15), an dem die Gondel (13) am oberen Ende des Mastes (15) montiert ist, wobei die Flügelanbau- und -abbau-Vorrichtung umfasst:
einen Hebemechanismus (40), der dafür konfiguriert ist, den Flügel (2) in einem Zustand anzuheben oder abzusenken, in dem der Flügel so aufgehängt ist, dass ein Flügelwurzelabschnitt (20) des Flügels (2) nach oben weist, und
mehrere Stützen (50, 51, 52), die dafür konfiguriert sind, in einem Zustand, in dem der Flügel (2) an dem Hebemechanismus (40) aufgehängt ist, eine durch den Flügel (2) ausgeübte Stützlast in der horizontalen Richtung an Positionen aufzunehmen, die in der Flügellängsrichtung des Flügels (2) voneinander abweichen,
wobei eine der Stützen (50, 51, 52) dafür konfiguriert ist, die Stellung des Flügels (2) zwischen einer erster Stellung, in der der Flügel mit Bezug auf die vertikale Richtung geneigt ist, und einer zweiten Stellung, in der ein Winkel zwischen einer Flügellängsrichtung des Flügels und der vertikalen Richtung ein anderer ist als der der ersten Stellung, justieren zu können, indem Stützpositionen in der horizontalen Richtung des Flügels geändert werden, und
**dadurch gekennzeichnet, dass** die mehreren Stützen eine erste Stütze enthalten, die so konfiguriert ist, dass sie an dem zweiten Drehring so angebracht werden kann, dass sie mindestens einen Teil des Flügelwurzelabschnitts des Flügels berührt und die durch den Flügelwurzelabschnitt des Flügels angelegte Stützlast in der horizontalen Richtung aufnimmt.

11. Flügelanbau- und -abbau-Vorrichtung für eine Windturbine nach Anspruch 10,
wobei die mehreren Stützen (50, 51, 52) eine erste Stütze (50) enthalten, die an dem Flügelanbauabschnitt (30) so angeordnet ist, dass sie mindestens einen Teil einer Außenumfangsfläche des Flügelwurzelabschnitts (20) des Flügels (2) berührt, und eine zweite Stütze (52) enthalten, die auf einer Flügelspitzenabschnitt (22)-Seite mit Bezug auf die erste Stütze (50) angeordnet ist und konfiguriert ist, die Stützlast in der horizontalen Richtung auszunehmen und eine Schwingbewegung in der horizontalen Richtung des Flügels zu begrenzen, wobei sich der Flügel (2) in einem Zustand befindet, in dem er an dem Hebemechanismus (40) aufgehängt ist, und
wobei die Flügelanbau- und -abbau-Vorrichtung des Weiteren umfasst: einen Bewegungsmechanismus (530), der dafür konfiguriert ist, die zweite Stütze (52) gemäß einer Bewegung des Flügels entlang des Mastes (15) durch den Hebemechanismus (40) zu bewegen, und einen Führungsteil (510), der dafür konfiguriert ist, die zweite Stütze (52) so zu führen, dass sich die zweite Stütze entlang des Mastes (15) durch den Bewegungsmechanismus (530) bewegt.

## Revendications

1. Procédé de montage et de démontage d'une pale pour une éolienne (1) qui comprend au moins une pale (2), un moyeu (3) sur lequel la pale (2) peut être montée, une nacelle (13) supportant le moyeu (3) pour être librement rotatif, et une tour (15) sur laquelle la nacelle (13) est montée au niveau d'une extrémité supérieure de la tour (15), le procédé de montage et de démontage d'une pale comportant :
une étape de maintien destinée à maintenir la pale (2), dans un état où la pale est suspendue de telle sorte qu'une partie de pied de pale (20) de la pale (2) est orientée vers le haut, dans une première attitude dans laquelle une direction de longueur de pale de la pale (2) est inclinée par rapport à une direction verticale, en recevant une charge de support dans une direction horizontale appliquée à partir de la pale par une pluralité de supports (50, 51, 52) dans des positions différentes l'une par rapport à l'autre dans la direction de longueur de pale de la pale ;
une étape de montage/démontage destinée à monter ou démonter la pale (2) par rapport à une partie de fixation de pale (30) positionnée au niveau d'une partie inférieure du moyeu (3) dans une direction sensiblement verticale, la pale étant maintenue dans la première attitude ;
une étape d'ajustement d'attitude destinée à ajuster une attitude de la pale (2) entre la première attitude et une deuxième attitude dans laquelle un angle entre la direction de longueur de pale de la pale et la direction verticale est différent de celui dans la première attitude, en changeant une position de support dans la direction horizontale de au moins un de la pluralité de supports (50, 51, 52) ; et
une étape de soulèvement/abaissement destinée à soulever ou abaisser la pale (2) le long de la tour (15) en utilisant un mécanisme de levage (40) comprenant un treuil ou une grue ;
le procédé étant **caractérisé en ce que** la pluralité de supports comprend un premier support (50) disposé sur la partie de fixation de pale (30) de façon à venir en contact avec au moins une partie de la partie de pied de pale (20) de la pale (2), et **en ce que**, dans l'étape de maintien, le premier support (50) reçoit la charge de support dans la direction horizontale appliquée à partir de la partie de pied de pale (20) de la pale (2).

2. Procédé de montage et de démontage d'une pale pour une éolienne (1) selon la revendication 1,
dans lequel le premier support (50) est disposé de façon à venir en contact avec au moins une première zone d'un côté tour, la première zone faisant partie d'une surface circonférentielle extérieure de la partie de pied de pale (20) de la pale (2),
dans lequel la pluralité de supports (50, 51, 52) comprend un deuxième support (52) qui est en contact avec la pale sur un côté de partie de bout de pale (22) par rapport à une position de centre de gravité (D) de la pale (2), et
dans lequel, dans l'étape d'ajustement d'attitude, l'attitude de la pale (2) est ajustée en changeant la position de support dans la direction horizontale du deuxième support (52).

3. Procédé de montage et de démontage d'une pale pour une éolienne (1) selon la revendication 1,
dans lequel le premier support (51) est disposé de façon à venir en contact avec au moins une deuxième zone sur un côté opposé à la tour (15), la deuxième zone faisant partie de la surface circonférentielle extérieure de la partie de pied de pale (20) de la pale (2),
dans lequel la pluralité de supports comprend un deuxième support (52) qui est en contact avec la pale (2) sur un côté de partie de pied de pale (20) par rapport à une position de centre de gravité (D) de la pale (2), et
dans lequel, dans l'étape d'ajustement d'attitude, l'attitude de la pale (2) est ajustée en changeant la position de support dans la direction horizontale du deuxième support (52).

4. Procédé de montage et de démontage d'une pale pour une éolienne (1) selon l'une quelconque des revendications 1 à 3,
dans lequel l'étape de soulèvement/abaissement comprend : une étape de soulèvement/abaissement vertical destinée à soulever ou abaisser la pale (2) dans un état où la pale est maintenue dans la deuxième attitude dans laquelle la direction de longueur de pale est le long de la direction sensiblement verticale ; une étape de soulèvement/abaissement horizontal destinée à soulever ou abaisser la pale dans un état où la pale est maintenue dans une troisième attitude dans laquelle la direction de longueur de pale est le long de la direction horizontale ; et une étape de rotation destinée à faire tourner la pale entre l'étape de soulèvement/abaissement vertical et l'étape de soulèvement/abaissement horizontal, et
dans lequel, dans l'étape de soulèvement/abaissement,
la pale est soulevée ou abaissée en exécutant l'étape de soulèvement/abaissement vertical quand la pale (2) est au niveau d'une partie supérieure de la tour (15), et
la pale (2) est soulevée ou abaissée en exécutant l'étape de soulèvement/abaissement horizontal quand la pale (2) est au niveau d'une partie inférieure de la tour (15).

5. Procédé de montage et de démontage d'une pale pour une éolienne (1) selon l'une quelconque des revendications 1 à 4,
dans lequel la pluralité de supports (50, 51, 52) comprend un premier support (50) disposé sur la partie de fixation de pale (30) de façon à venir en contact avec au moins une partie de la surface circonférentielle extérieure de la partie de pied de pale (20) de la pale (2), et un deuxième support (52) disposé sur un côté de partie de bout de pale (22) par rapport au premier support (50) et configuré pour recevoir la charge de support dans la direction horizontale et pour limiter un mouvement d'oscillation dans la direction horizontale de la pale (2), la pale étant dans un état de suspension par le mécanisme de levage (40),
dans lequel le procédé de montage et de démontage d'une pale comporte en outre une étape de déplacement destinée à déplacer le deuxième support en fonction d'un mouvement de la pale (2) le long de la tour (15) dans l'étape de soulèvement/abaissement, et
dans lequel, dans l'étape de déplacement, le deuxième support est déplacé le long de la tour tout en étant guidé par une partie de guidage.

6. Procédé de montage et de démontage d'une pale pour une éolienne (1) selon la revendication 5, dans lequel, dans l'étape de rotation, le deuxième support (52) est tourné avec une rotation de la pale.

7. Procédé de montage et de démontage d'une pale pour une éolienne selon la revendication 5 ou 6,
dans lequel le deuxième support (52) comprend un mécanisme d'ajustement de direction horizontale configuré pour ajuster une distance entre la tour et le deuxième support dans la direction horizontale, et
dans lequel, dans l'étape d'ajustement d'attitude, le mécanisme d'ajustement de direction horizontale du deuxième support (52) est utilisé pour ajuster l'attitude de la pale entre la première attitude et la deuxième attitude.

8. Procédé de montage et de démontage d'une pale pour une éolienne (1) selon la revendication 5 ou 6,
dans lequel, le deuxième support est relié à un câble d'une grue ou d'un treuil disposé à terre, sur un bateau, ou sur une structure flottant sur l'océan, et
dans lequel, dans l'étape d'ajustement d'attitude, l'attitude de la pale (2) est ajustée entre la première attitude et la deuxième attitude en ajustant la longueur du câble.

9. Procédé de montage et de démontage d'une pale pour une éolienne (1) selon la revendication 5 ou 6,
selon lequel, dans l'étape de rotation, tout en étant suspendue en deux points comprenant un point sur un côté de partie de pied de pale et un point sur un côté de partie de bout de pale par l'intermédiaire de deux câbles, la pale est tournée en ajustant la longueur de chacun des deux câbles au moyen du mécanisme de levage disposé dans le moyeu de la nacelle.

10. Appareil de montage et de démontage d'une pale pour une éolienne qui comprend au moins une pale (2), un moyeu (3) sur lequel la pale (2) peut être montée par l'intermédiaire d'un palier comprenant un premier anneau de rotation sur lequel la partie de pied de pale de la pale peut être montée et un deuxième anneau de rotation monté sur le moyeu pour pouvoir tourner par rapport au premier anneau de rotation, une nacelle (13) supportant le moyeu (3) pour être librement rotatif, et une tour (15) sur laquelle la nacelle (13) est montée au niveau d'une extrémité supérieure de la tour (15), l'appareil de montage et de démontage d'une pale comportant :
un mécanisme de levage (40) configuré pour soulever ou abaisser la pale (2) dans un état où la pale est suspendue de telle sorte qu'une partie de pied de pale (20) de la pale (2) est orientée vers le haut ; et
une pluralité de supports (50, 51, 52) configurés pour, dans un état où la pale (2) est suspendue par le mécanisme de levage (40), recevoir une charge de support dans la direction horizontale appliquée à partir de la pale (2) dans des positions différentes l'une par rapport à l'autre dans une direction de longueur de pale de la pale (2),
selon lequel un des supports (50, 51, 52) est configuré pour être capable d'ajuster l'attitude de la pale (2) entre une première attitude dans laquelle la pale est inclinée par rapport à la direction verticale et une deuxième attitude dans laquelle un angle entre une direction de longueur de pale de la pale et la direction verticale est différent de celui de la première attitude en changeant des positions de support dans la direction horizontale de la pale, et
**caractérisé en ce que** la pluralité de supports comprend un premier support configuré de façon à pouvoir être monté sur le deuxième anneau de rotation pour venir en contact avec au moins une partie de la partie de pied de pale de la pale et pour recevoir la charge de support dans la direction horizontale appliquée à partir de la partie de pied de pale de la pale.

11. Appareil de montage et de démontage d'une pale pour une éolienne selon la revendication 10,
dans lequel la pluralité de supports (50, 51, 52) comprend un premier support (50) disposé sur la partie de fixation de pale (30) de façon à venir en contact avec au moins une partie d'une surface circonférentielle extérieure de la partie de pied de pale (20) de la pale (2), et un deuxième support (52) disposé sur un côté de partie de bout de pale (22) par rapport au premier support (50) et configuré pour recevoir la charge de support dans la direction horizontale et pour limiter le mouvement d'oscillation dans la direction horizontale de la pale, la pale (2) étant dans un état de suspension par le mécanisme de levage (40), et
dans lequel l'appareil de montage et de démontage d'une pale comporte en outre : un mécanisme de déplacement (530) configuré pour déplacer le deuxième support (52) en fonction d'un mouvement de la pale le long de la tour (15) grâce au mécanisme de levage (40) ; et une partie de guidage (510) configurée pour guider le deuxième support (52) de telle sorte que le deuxième support se déplace le long de la tour (15) grâce au mécanisme de déplacement (530).
